# EUROPEAN PATENT APPLICATION

(11) **EP 4 414 579 A1**
(43) Date of publication of application: **14.08.2024**
(21) Application number: 23155722.4
(22) Date of filing: 09.02.2023
(51) Int. Cl.: F16D 65/00

(54) **DISC BRAKE ASSEMBLY AND BRAKE DUST PARTICLE FILTER (BDPF) FOR ACTIVE SUCTION DUE TO INNER VENTILATION**

(71) Applicant: MANN+HUMMEL GmbH, 71636 Ludwigsburg (DE)
(72) Inventor: KOHN, Kevin, 71723 Großbottwar (DE); BECK, Andreas, 74366 Kirchheim (DE); KELLER, Dr. Florian, 71640 Ludwigsburg (DE); EPLI, Sven, 74078 Heilbronn (DE); PFANNKUCH, Steffen, 71636 Ludwigsburg (DE); BEH, Oliver, 73733 Esslingen (DE)
(74) Representative: Mann + Hummel Intellectual Property

(57) **Abstract**

The invention refers to a disk brake assembly (10) comprising a brake disk (12) comprising several inner ventilation channels (26) extending from a radial inner face (28) to a radial outer face (30) of the brake disk (12), anda brake dust particle filter (32) comprising a housing (34) and at least one filter element (36; 38) arranged inside the housing (34). The housing (34) and the at least one filter element (36; 38) cover the radial outer face (30) of the brake disk (12) at least partially. The disk brake assembly (10) further comprises at least one nozzle (42) and an air duct (44) connecting at least one outlet (46) of the housing (34) with the at least one nozzle (42) that is arranged at the radial inner face (28) and is for suctioning air from the housing (34) into the inner ventilation channels (26).

## Description

### Technical Field

The present invention refers to a disk brake assembly comprising a brake disk having several inner ventilation channels extending from a radial inner face to a radial outer face of the brake disk, a brake dust filter having a housing and at least one filter element arranged inside the housing.

### Background

Such brake assemblies are generally known from the state of the art.

Inner ventilation of brake disks is commonly used to enhance thermal behavior of disk brakes by increased cooling.

During use of disk brakes, brake dust is generated as debris of brake pads and the brake disk against which the brake pads are pressed. The brake dust contributes to environmental pollution. Furthermore, brake dust is deposited e.g. on a rim of a vehicle having the disk brake, where it presents a hard to remove staining.

To prevent brake dust particles from entering into the environment, various types of brake dust particle filters have been proposed. A common type of brake dust particle filter comprises a housing and a filter element arranged inside the housing. An air flow comprising brake dust particles is directed through the filter element, in order to trap the brake dust particles in the filter element.

US 2018/0031059 A1 discloses a brake dust waste collector. Contaminated air flows from brake pads and a rotor through a filtering system to return filtered air into the system. The assembly comprises various ring sectors. Clean air flows in at the bottom of the (brake) disk and flows radially outwards through vents. At the outer edge of the disk, the module employs two lipped members to "tap-off' an amount of the vent airflow. This portion of airflow is dictated by the degree of lip overhang into the vent outlet area and is directed into a bypass channel formed by the module outer casing to an outer high pressure region. The air then flows downwards to a low pressure region and back towards the disk surface and then is driven outwards to the outer rim of the disk. At this point, a second lip guides the total airflow into a filter channel forcing it through filters and back towards the disk surface where it "scrubs" the disk surface of dust. The air is thus constantly recycled and filtered. Once the recycling process has been established (whenever the wheel is rotating) the majority of air will pass through the disk vents so maximizing cooling. This loop of air movement is maintained between inner ring sectors and outer ring sectors to maintain and direct air movement and dust collection within the filtering system.

Form DE 10 2017 201 736 A1 a brake dust particle filter is known, which has a cyclone structure for separating brake dust particles from an airflow. Channels are provided for transporting particles form a caliper to the filter. In order to operate the cyclone, air inlets are provided which face in a direction of travel of a vehicle with the filter.

Another brake dust particle filter having a cyclone dust collector is known from CN 111271394 B. The brake dust-containing gas enters a pair of dust filter mechanisms, and will rotate and move downward along the inner wall of the cyclone dust collector. As the diameter of the inner wall decreases, the centrifugal force increases, and the brake dust is thrown towards the wall of the cyclone and moves downward. A part of the filtered gas flows out through a dust return inlet, and is re-inhaled into a dust passage. The other part of the filtered gas is discharged into the atmosphere through a further dust passage.

It is an object of the invention to enhance the filtering performance of brake dust particle filter.

This is achieved by a disk brake assembly according to claim 1 and a brake dust particle filter according to claim 15. Advantageous embodiments are given in the subclaims and the description.

### Summary

In accordance with the invention, a disk brake assembly is provided. The disc brake assembly comprises a brake disk having several inner ventilation channels extending from a radial inner face to a radial outer face of the brake disk, a brake dust filter having a housing and at least one filter element arranged inside the housing.

The brake disk is in other words an inner ventilated brake disk. The radial inner face is typically arranged near a mounting section of the brake disk. At the radial inner face, the inner ventilation channels commence. The radial inner face may be oriented in the radial direction or - typically - oblique to an axis of rotation of the brake disk. When the brake disk rotates, air is conveyed from the radial inner face to the radial outer face, where the air exits from the inner ventilation channels.

Indications of directions, such as radial or axial, generally refer to the axis of rotation of the brake disk, if not stated otherwise.

The filter element of the brake dust particle filter may comprise a filter medium and optionally a frame for holding the filter element in the housing. Alternatively, a filter medium constituting the filter element may be directly held in the housing. The filter element may be held detachably in the housing.

The housing of the brake dust particle filter covers at least part of the radial outer face of the brake disk. Preferably, also the filter element or one of the filter elements covers at least part of the radial outer face. During rotation of the brake disk, an airflow is thus directed towards the filter element, where brake dust particles carried with the air flow are retained.

Preferably, the housing and the filter element or one of the filter elements also cover a friction surface, particularly preferably both friction surfaces, of the brake disk at least partially. This enhances the efficiency of the brake dust particle filter.

Typically, the disk brake assembly comprises a caliper. The caliper may comprise brake pads, which can be pressed against the two friction surfaces of the brake disk by at least one piston of the caliper.

The caliper is typically provided in front of the brake dust particle filter with regard to a primary direction of rotation of the brake disk. When the brake disk rotates, brake dust particles are thus conveyed from the caliper into the housing towards the filter element.

According to the invention, an air duct connects at least one outlet of the housing with at least one nozzle, which is arranged at the radial inner face for suctioning air from the housing into the inner ventilation channels. During use of the disk brake assembly, air is thus recirculated from the housing into the inner ventilation channels.

Since the inner ventilation channels convey air to the radial outer face, i.e. into the housing, an over pressure builds up inside the housing. Likewise, at the radial inner face the pressure is reduced. By establishing a fluid connection of the housing and the radial inner face, the over pressure in the housing is reduced. This contributes to prevent brake dust particles from being lost through gaps between the housing and the brake disk or the caliper.

By selecting a suitable position for the at least one outlet, the pressure distribution and flow characteristics inside the housing can be affected. This allows increasing the filtration efficiency even further.

Furthermore, the air and the particles, which are fed back into the inner ventilation channels, get a further chance to get in contact with the filter element. Brake dust particles, which for once might have got past the filter element, are thus likely to be retained upon their second contact with the filter element. Consequently, the filtering performance of the brake dust particle filter is enhanced.

It should be noted that no additional power is needed for suctioning air from the filter housing into the inner ventilation channels. The pressure difference which causes the airflow through the air duct is automatically generated whenever the brake disk rotates.

Preferably, the nozzle is arranged at least 90°, in particular at least 120°, in front of the housing with respect to a primary direction of rotation of the brake disk. The nozzle may be arranged at most 210°, in particular 180°, in front of the housing with respect to the primary direction of rotation of the brake disk. It was found that with this position the particles, which are fed into the inner ventilation channels by the nozzle, will, most likely, leave the inner ventilation channels inside the housing for a typical range of rotational speeds of the brake disk.

A width of the nozzle may cover at least two, preferably at least three or more, inner ventilation channels of the brake disk. This contributes to enhance the pressure difference between the housing and the nozzle. At the same time, a width of the nozzle needs not to be widened too much in the circumferential direction with respect to the air duct. Favorable flow characteristics of the nozzle can be obtained in consequence. Depending on the filter size, it may also be necessary to cover more than three channels to achieve an even higher suction effect.

Preferably, the outlet or one of the outlets is arranged on a clean side of the brake dust particle filter. To this end, the outlet is typically arranged behind the filter element as viewed from the brake disk. Thus, the reduced pressure at the nozzle contributes to suck the particle loaden air through the filter element. A particular high filtration efficiency can be obtained in this way.

The outlet or one of the outlets may be arranged besides the filter element. In other words, the outlet may be connected to a raw side of the brake dust particle filter. This is favorable, if the airflow is guided along a surface of the filter element in order to retain the brake dust particles. This arrangement contributes to force the air to flow along the filter element.

Preferably, the outlet or one of the outlets is arranged at a radially outer side of the housing. This position is favorable, if the outlet shall be arranged on the clean side of the brake dust particle filter.

The outlet or one of the outlets may be arranged at an axial side, preferably an axial inner side (with respect to a vehicle, which is equipped with the disk brake assembly) of the housing. This position is favorable, if the filter element or one of the filter elements covers part of a friction surface. Typically, irrespective of the position of the outlet(s), the nozzle is also arranged on the axially inner side of the brake disk.

The outlet or one of the outlets may be arranged oblique to an axis of rotation of the brake disk. This can be favorable with regard to space requirements of the air duct.

Preferably, the outlet or one of the outlets is arranged at a rear end of the housing with respect to a primary direction of rotation of the brake disk. Thus, the outlet is typically arranged at a distant end of the housing as seen from the caliper. This position enhances use of the entire filtration area of the filter element.

The housing can have at least two, in particular at least three, outlets. Depending on the application, this allows fine-tuning the behavior of the brake dust particle filter. Several, in particular all, outlets may be connected to one single nozzle. It was found, that the use of a single nozzle is favorable with respect to the suction effect applied to the nozzle by the inner ventilation channels.

The nozzle may be provided with an interface for fixing the nozzle to a knuckle fixture of a vehicle. The nozzle and the interface are preferably monolithic with each other. Since the nozzle is arranged at some distance from the housing, means for securing its position need to be provided. If the nozzle is fixed to the vehicle, in particular the knuckle fixture, vibrations of the nozzle with respect to the housing and stress acting on the air duct can be reduced.

Typically, the caliper is also fixable to the knuckle fixture. The housing may be fixed to the caliper.

The air duct can be a rigid pipe. In particular, the pipe can be made of metal. This is advantageous with regard to temperature resistance. Furthermore, complex routing paths along other components can be realized with a rigid pipe.

Alternatively or additionally, the air duct can be a flexible hose. This can facilitate mounting of the brake dust particle filter and may minimize space requirements.

The present invention also relates to a brake dust particle filter for a disk brake assembly according to the invention, as described above. In other words, the brake dust particle filter has a housing and at least one filter element, which is arrangeable inside the housing. The housing, and preferably the filter element, are designed to cover a radial outer face of a brake disk at least partially. An air duct connects at least one outlet of the housing with at least one nozzle, which is arrangeable at a radial inner face of the brake disk for suctioning from the housing into inner ventilation channels extending from the radial inner face to a radial outer face of the brake disk.

### Brief Description of Drawings

Other advantages and features of the invention will be appreciated from the following description of embodiments of the invention with reference to the figures of the drawing, which show significant details, and from the claims. The individual features, as described above or explained below, may each be implemented individually or implemented together in any useful combination in variants of the invention.
Fig. 1 shows a disk brake assembly according to the invention comprising a brake disk and a brake dust particle filter according to the invention, in a schematic side view.
Fig. 2 shows the disk brake assembly of Fig. 1 in a schematic perspective view.
Fig. 3 shows the disk brake assembly of Fig. 1 in a schematic section perpendicular to an axis of rotation of the brake disk.
Fig. 4 shows a detail of the disk brake assembly of Fig. 1 in a schematic perspective view.
Fig. 5 shows a nozzle of the brake dust particle filter of the disk brake assembly of Fig. 1 in a schematic perspective view.
Fig. 6 shows a detail of the disk brake assembly of Fig. 1 in a schematic section through the nozzle along the axis of rotation of the brake disk.

### Detailed Description

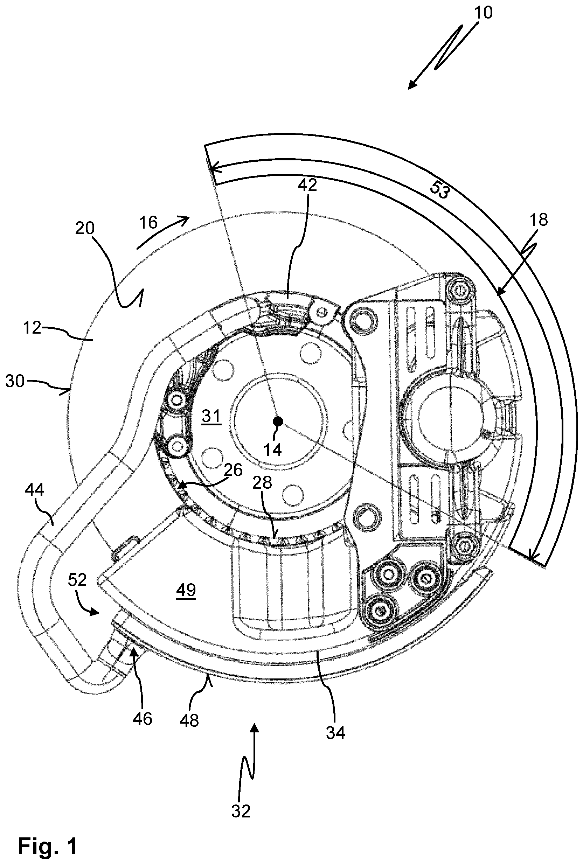

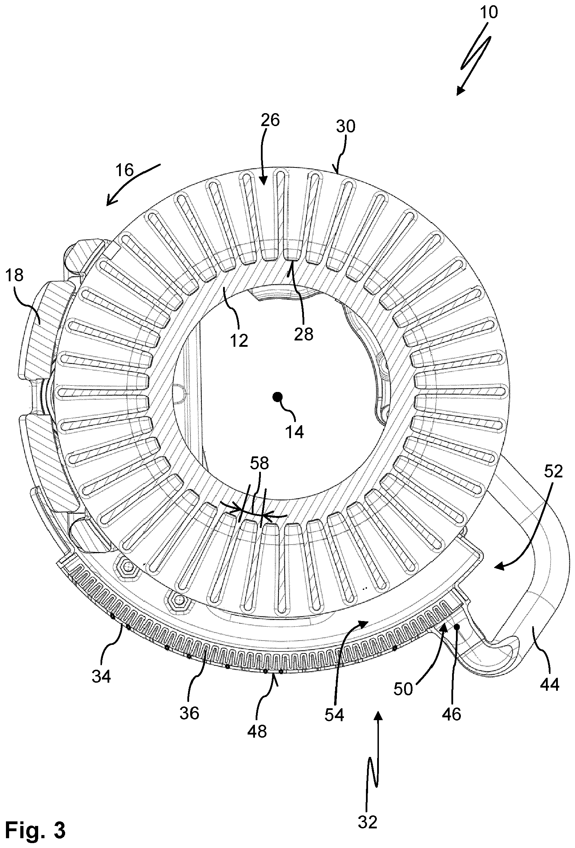

Figures 1, 2 and 3 show a disk brake assembly 10. The disk brake assembly comprises a brake disk 12, which is rotatable about an axis of rotation 14, which runs perpendicular to the drawing plane in Figures 1 and 3. When a vehicle (not depicted), which is equipped with the disk brake assembly 10 drives forward, the brake disk 12 rotates in a primary direction of rotation 16.

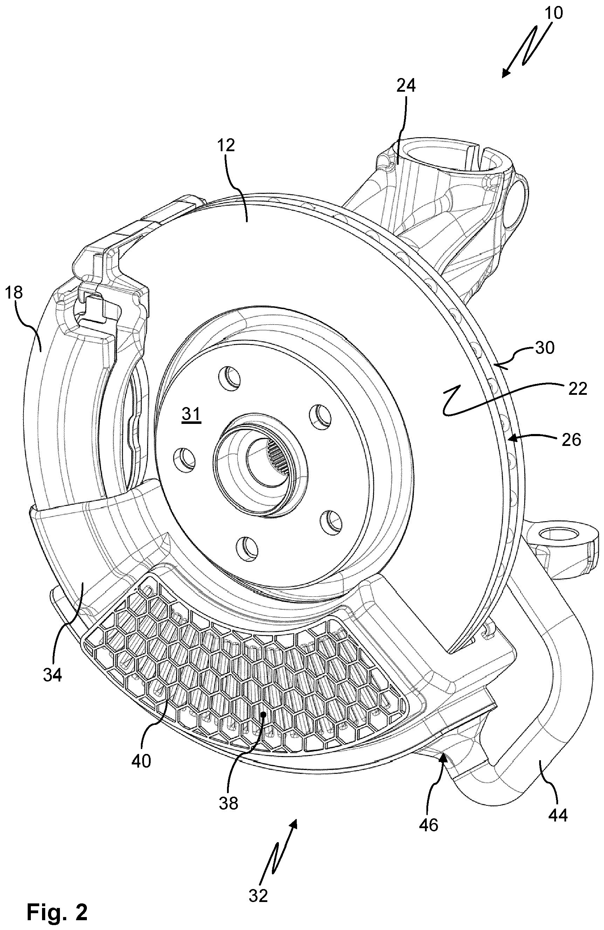

A caliper 18 is provided in order to press brake pads (not shown in detail) against two friction surfaces 20, 22 of the brake disk 12. The caliper 18 is fixed to a knuckle fixture 24, see Figure 2.

As can be seen in particular from Figure 3, the brake disk 12 is an inner ventilated brake disk. Several inner ventilation channels 26 extend in the radial direction from a radial inner face 28 to a radial outer face 30. The radial inner face 28 is arranged between a mounting section 31 and the radial outer face 30, see Figure 1.

The disk brake assembly 10 is equipped with a brake dust particle filter 32. The brake dust particle filter 32 comprises a housing 34. The housing 34 partially covers the radial outer face 30 and the two friction surfaces 20, 22 of the brake disk 12, see Figures 1-3. The housing is 32 arranged behind the caliper 18 in the primary direction of rotation 16. The housing 34 may overlap the caliper 18, to avoid brake dust particles from escaping. The housing 34 may be attached to the caliper 18.

At least one filter element, in the depicted embodiment two filter elements 36, 38 are arranged inside the housing. The filter element 36 partially covers the radial outer face 30 of the brake disk 12, see Figure 3. The filter element 38 partially covers the (axially outer) friction surface 22, see Figure 2. An axially outer side of the housing 34, which covers the filter element 38 may be formed as a grille 40 having several openings. Particle loaden air, which has passed through filter element 38 can exit the housing 34 through the openings of grille 40. A third filter element may partially cover the axially inner friction surface 20 (not depicted in detail).

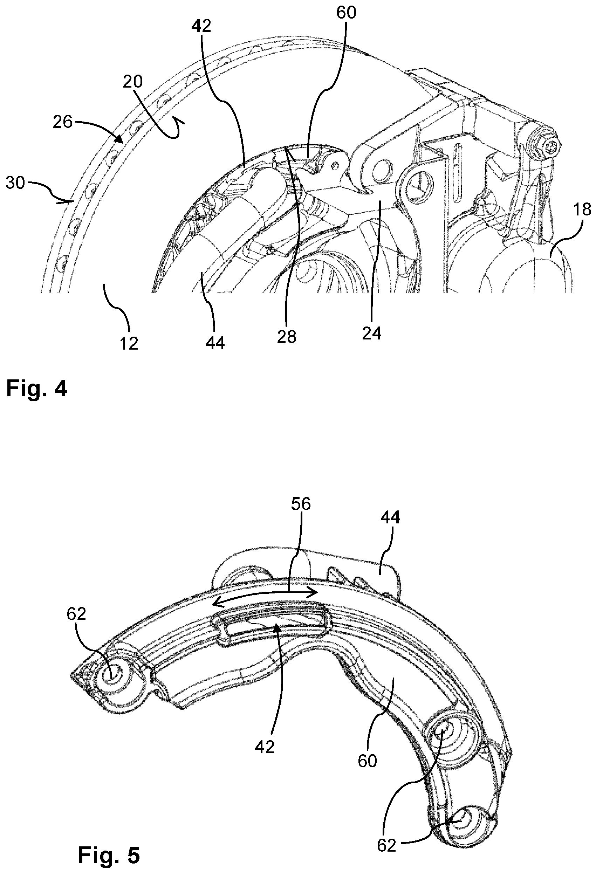

The housing 34 is fluidly connected to a nozzle 42 via an air duct 44, see Figures 1-3 and also Figure 4. In the depicted embodiment, the air duct 44 is constructed as a rigid metal pipe. The air duct 44 is connected to the housing 34 at an outlet 46.

Upon rotation of the brake disk 12, air is fed into the housing 34 via the inner ventilation channels 26. Furthermore, air is drawn into the housing 34 from the caliper 18 by the rotating firction surfaces 20, 22. This results in a pressure buildup inside the housing 34. Likewise, the pumping effect of the rotating inner ventilation channels 26 causes the pressure at the radial inner face 28 to drop. Consequently, an air flow through the air duct 44 from the housing 34, or the housing outlet 46 to be more precise, towards the nozzle 42 is established.

In the depicted embodiment, the outlet 46 is arranged at a radial outer side 48 of the housing 34, see Figures 1 and 3. Additionally or alternatively, according to an embodiment which is not depicted, an outlet coud be arranged at an axially inner side 49 (cf. Figure 1) of the housing 34, where preferably a filter element is provided inside the housing between the fricition surface 20 and the axially inner side 49 of the housing 34.

In the depicted embodiment, the air duct 44 is oriented in the radial direction at the outlet 46. In particular, the outlet 46 is arranged on a clean side 50 of filter element 36, see Figure 3. I.e. air, which enters the air duct 44 at outlet 46 has passed through the filter element 36 beforehand. Furthermore, the outlet 46 is arranged distant from the caliper 18, i.e. at a rear end 52 of the housing with respect to the primary direction of rotation 16.

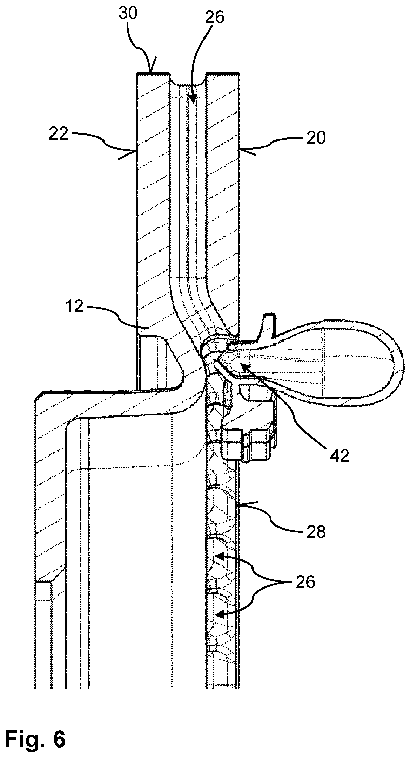

The nozzle 42 is arranged adjacent to the radial inner face 28, where the inner ventilation channels 26 commence, see also Figure 6. From the nozzle 42, the air is sucked into the rotating inner ventilation channels 26.

In the depicted embodiment, the nozzle 42 is arranged at an angle 53 of about 135° in front of the housing 34 with regard to the primary direction of rotation 16, see Figure 1. Since the brake disk 12 rotates in direction 16 while the air moves along the inner ventilation channels 26, the air which was fed into the inner ventilation channels 26 via the nozzle 42 is introduced into the housing 34 once again. Brake dust particles which occasionally might have gotten from a raw side 54 (see Figure 3) past the filter element 36 to the clean side 50 will thus be brougth to the filter element 36 for one more time.

The nozzle 42 is depicted in Figure 5 in more detail. It can be seen that the nozzle 42 has a certain extension in the circumferential direction. Here, a circumferenttial width 56 of the nozzle 42 is such that the nozzle 42 introduces air into three inner ventilation channels 26 at once, i.e. the circumferential width is larger than two times the spacing 58 between adjacent inner ventilation channels 26 at the radial inner face 28, see Figure 3.

An interface 60 is provided for fixing the nozzle 42 to knuckle fixture 24, see Figures 4 and 5. Here, the interface 60 comprises screw holes 62 through which screws (not depicted in detail) may be inserted to attach the interface 60 to the knuckle fixture 24.

In summary, the invention refers to a brake dust particle filter. A housing with a filter medium partially is designed to cover an inner ventilated brake disk at an outer circumference. An air duct is provided which fluidly connects the housing to a nozzle. The nozzle is to be arranged at a radial inner origin of the inner ventilation channels. During use, the pumping effect of the rotationg inner ventilation channels draws air from the housing through the air duct. Consequently, the pressure inside the housing is reduced, which reduces particle loss at gaps of the housing. At the nozzle, the air which was extracted from the housing is fed into the inner ventialtion channels. From the inner ventilation channels the air may again be blown into the housing. Thus, repeated filtration of air with particle loading is enabled.

### Reference Numbers

Disk brake assembly 10
Brake disk 12
Axis of rotation 14
Primary direction of rotation 16
Caliper 18
Friction surfaces 20, 22
Knuckle fixture 24
Inner ventilation channels 26
Radial inner face 28
Radial outer face 30
Mounting section 31
Brake dust particle filter 32
Housing 34
Filter element 36; 38
Grille 40
Nozzle 42
Air duct 44
Outlet 46
Radial outer side 48
Axial inner side 49
Clean side 50
Rear end 52
Angle 53
Raw side 54
Circumferential width 56
Spacing 58
Interface 60
Screw holes 62

## Claims

1. A disk brake assembly (10) comprising:
a brake disk (12) comprising several inner ventilation channels (26) extending from a radial inner face (28) to a radial outer face (30) of the brake disk (12);
a brake dust particle filter (32) comprising a housing (34) and at least one filter element (36; 38) arranged inside the housing (34),
wherein the housing (34) and the at least one filter element (36; 38) cover the radial outer face (30) of the brake disk (12) at least partially;
at least one nozzle (42); and
an air duct (44) connecting at least one outlet (46) of the housing (34) with the at least one nozzle (42) that is arranged at the radial inner face (28) and is for suctioning air from the housing (34) into the inner ventilation channels (26).

2. The disk brake assembly (10) according to claim 1, wherein the at least one nozzle (42) is arranged at least 90°, preferably at least 120°, in front of the housing (34) with respect to a primary direction of rotation (16) of the brake disk (12).

3. The disk brake assembly (10) according to claim 1 or 2, wherein a width of the at least one nozzle (42) covers at least two, preferably at least three or more, inner ventilation channels (26) of the brake disk (12).

4. The disk brake assembly (10) according to one of the preceding claims, wherein the at least outlet (46) is arranged on a clean side (50) of the brake dust particle filter (32).

5. The disk brake assembly (10) according to one of the preceding claims, wherein the at least one outlet (46) is arranged besides the at least one filter element (36; 38).

6. The disk brake assembly (10) according to one of the preceding claims, wherein the at least one outlet (46) is arranged at a radially outer side (48) of the housing (34).

7. The disk brake assembly (10) according to one of the preceding claims, wherein the at least one outlet (46) is arranged at an axial side, preferably an axial inner side (49), of the housing (34).

8. The disk brake assembly (10) according to one of the preceding claims, wherein the at least one outlet (46) is arranged oblique to an axis of rotation (14) of the brake disk (12).

9. The disk brake assembly (10) according to one of the preceding claims, wherein the at least one outlet (46) is arranged at a rear end (52) of the housing (34) with respect to a primary direction of rotation (16) of the brake disk (12).

10. The disk brake assembly (10) according to one of the preceding claims, wherein the housing (34) comprises at least two, in particular at least three, outlets (46), which are preferably connected to one single nozzle (42).

11. The disk brake assembly (10) according to one of the preceding claims, wherein the at least one nozzle (42) comprises an interface (60) for fixing the at least one nozzle (42) to a knuckle fixture (24) of a vehicle.

12. The disk brake assembly (10) according to one of the preceding claims, wherein the air duct (44) is either one or both of a rigid pipe and a flexible hose.

13. The disk brake assembly (10) according to one of the preceding claims, wherein the housing (34) and the at least one filter element (36; 38) cover at least one friction surface (20, 22), preferably both friction surfaces (20, 22), of the brake disk (12) at least partially.

14. The disk brake assembly (10) according to one of the preceding claims further comprising a caliper (18).

15. A brake dust particle filter (32) for the disk brake assembly (10) according to one of the preceding claims.
